# EUROPEAN PATENT APPLICATION

(11) **EP 4 700 341 A1**
(43) Date of publication of application: **25.02.2026**
(21) Application number: 25197268.3
(22) Date of filing: 21.08.2025
(51) Int. Cl.: G01G 19/393

(54) **DISTRIBUTING AND FEEDING APPARATUS AND COMBINATION WEIGHING APPARATUS**

(30) Priority: 23.08.2024 JP 2024142026
(71) Applicant: Ishida Co., Ltd., Kyoto-shi Kyoto 606-8392 (JP)
(72) Inventor: ENAMI, Shinya, Shiga, 520-3026 (JP); KISHIKAWA, Mikio, Shiga, 520-3026 (JP)
(74) Representative: Gill Jennings & Every LLP

(57) **Abstract**

Object

Provided is a distributing and feeding apparatus and a combination weighing apparatus that can reduce jamming of distribution and feeding of a long article from a distribution table to a transport feeder.

Solution

A distributing and feeding apparatus 1 includes a distribution table 2a configured to circumferentially distribute a long article J and being fed from above, and transport the article J in a circumferential direction D1 such that a longitudinal direction of the article J is along the circumferential direction D1 of the distribution table 2a at an outer peripheral portion 2d, a plurality of guide members 20 provided around the outer peripheral portion 2d of the distribution table 2a, and a plurality of transport feeders 3 arrayed radially around the distribution table 2a, and configured to transport the article J in a radial direction D2 while aligning the article J received from the distribution table 2a so as to face the radial direction D2. The guide member 20 is provided so as to interfere with the article J transported at the outer peripheral portion 2d of the distribution table 2a so that the longitudinal direction of the article J is directed from the circumferential direction D1 to the radial direction D2.

## Description

### Technical Field

The present invention relates to a distributing and feeding apparatus and a combination weighing apparatus.

### Background Art

Patent Literature 1 describes a combination weighing machine in which a rod-shaped article is dropped from a drop opening of a circular feeder onto a linear feeder, and an alignment piece of a guide surface of the linear feeder guides the rod-shaped article so as to be parallel to the alignment piece.

### Citation List

### Patent Literature

Patent Literature 1: JP 08-271327 A

### Summary of Invention

### Technical Problem

In the above-described combination weighing machine of the related art, the rod-shaped article is guided on the linear feeder with a direction orthogonal to a radial direction as a longitudinal direction. On the other hand, in a distributing and feeding apparatus and a combination weighing apparatus including a transport feeder that transports an article in a radial direction while aligning the article so as to face the radial direction, the article may be continuously transported in a circumferential direction in a state where a longitudinal direction of the article is along the circumferential direction of a distribution table on the distribution table that circumferentially distributes the long article fed from above. In this case, there is a risk that the distribution and feeding of the article from the distribution table to the transport feeder is jammed.

An object of the present invention is to provide a distributing and feeding apparatus and a combination weighing apparatus that can reduce jamming of distribution and feeding of a long article from a distribution table to a transport feeder.

### Solution to Problem

(1) A distributing and feeding apparatus according to one aspect of the present invention includes a distribution table configured to circumferentially distribute an article having extended length and being fed from above, and transport the article in a circumferential direction such that a longitudinal direction of the article is along the circumferential direction at an outer peripheral portion of the distribution table, a plurality of guide members provided around the outer peripheral portion of the distribution table, and a plurality of transport feeders arrayed radially around the distribution table, and configured to transport the article in the radial direction while aligning the article received from the distribution table so as to face the radial direction. The plurality of guide members are provided so as to interfere with the article transported at the outer peripheral portion of the distribution table such that the longitudinal direction of the article is directed from the circumferential direction to the radial direction.
   In the distributing and feeding apparatus according to the one aspect of the present invention, the guide member interferes with the transported article at the outer peripheral portion of the distribution table, so that the longitudinal direction of the article is directed from the circumferential direction to the radial direction. Since the longitudinal direction of the article is directed from the circumferential direction to the radial direction, not only the direction of the article but also a direction of another article present around the article is changed from the circumferential direction by being hit by the article. In this way, the article is prevented from being continuously transported on the distribution table in the circumferential direction in a state where the longitudinal direction of the article is along the circumferential direction of the distribution table, and discharge of the article to the transport feeder is promoted. Therefore, according to the distributing and feeding apparatus according to the one aspect of the present invention, it is possible to reduce jamming of the distribution and the feeding of the long article from the distribution table to the transport feeder.
(2) In the above (1), each of the plurality of guide members may include an extending portion extending from below the outer peripheral portion of the distribution table along the radial direction, and an upright portion bent and extending upward at a tip end of the extending portion, and the upright portion may include a guide surface being non-orthogonal to the radial direction. In this case, the guide surface being non-orthogonal to the radial direction can guide the article so as to be distributed to the transport feeder without stopping movement of the article in the radial direction, the article having the longitudinal direction directed from the circumferential direction to the radial direction.
(3) In the above (1) or (2), each of the plurality of transport feeders may be provided at a position lower than the outer peripheral portion of the distribution table, and a step between an end portion of the outer peripheral portion of the distribution table and a bottom surface of a transport surface of each of the plurality of transport feeders may be larger than a length in the longitudinal direction of the article. In this case, it is possible to reduce jamming whereby the article spans between the end portion of the outer peripheral portion of the distribution table and the bottom surface of the transport surface of the transport feeder.
(4) In any one of the above (1) to (3), each of the plurality of transport feeders may be provided at the position lower than the outer peripheral portion of the distribution table, and the end portion of the outer peripheral portion of the distribution table need not come into contact with an upper end of the article when a lower end of the article abuts against a transport surface of each of the plurality of transport feeders. In this case, it is possible to reduce jamming whereby the article spans between the end portion of the outer peripheral portion of the distribution table and the transport surface of the transport feeder.
(5) In any one of (1) to (4), each of the plurality of transport feeders may have a bottom surface having a U-shaped cross-section when viewed along the radial direction, and widened side surfaces extending so as to widen upward from each of a pair of upper end portions of the bottom surface when viewed along the radial direction. In this case, even when the article distributed to the transport feeder is guided to the widened side surface, the article can be slid and dropped onto the bottom surface having a U-shaped cross-section to be aligned so as to face the radial direction on the bottom surface.
(6) In the above (5), a width dimension of the pair of upper end portions of the bottom surface when viewed along the radial direction may be shorter than a length in the longitudinal direction of the article. In this case, even when the article distributed to the transport feeder is directed to intersect the radial direction, at least one of both ends of the article is guided to the widened side surface. Therefore, the article can be more reliably slid and dropped onto the bottom surface having a U-shaped cross-section and aligned so as to face the radial direction on the bottom surface.
(7) A combination weighing apparatus according to another aspect of the present invention is a combination weighing apparatus including the distributing and feeding apparatus according to any one of the above (1) to (6) at an upper stage, and may include a plurality of hoppers each configured to receive the article transported by a corresponding one of the plurality of transport feeders of the distributing and feeding apparatus, a weighing unit configured to weigh the article stored in each of the plurality of hoppers, and a control unit configured to perform combination weighing, based on a weighing value of the article and discharge the article that has been combined from the hopper. Even in this case, the guide member interferes with the article transported at the outer peripheral portion of the distribution table, so that the longitudinal direction of the article is directed from the circumferential direction to the radial direction. Since the longitudinal direction of the article is directed from the circumferential direction to the radial direction, not only the direction of the article but also a direction of another article present around the article is changed from the circumferential direction by being hit by the article. In this way, the article is prevented from being continuously transported on the distribution table in the circumferential direction in the state where the longitudinal direction of the article is along the circumferential direction of the distribution table, and the distribution of the article to the transport feeder is promoted. Therefore, according to the combination weighing apparatus of the other aspect of the present invention, it is possible to reduce jamming of the distribution and the feeding of the long article from the distribution table to the transport feeder.

### Advantageous Effects of Invention

According to the present invention, it is possible to reduce jamming of distribution and feeding of a long article from a distribution table to a transport feeder.

### Brief Description of Drawings

FIG. 1 is a schematic configuration diagram of a distributing and feeding apparatus and a combination weighing apparatus of an embodiment.
FIG. 2 is a perspective view illustrating the distributing and feeding apparatus and the combination weighing apparatus of the embodiment.
FIG. 3 is a plan view of the distributing and feeding apparatus and the combination weighing apparatus of FIG. 1.
FIG. 4 is a side view of the distributing and feeding apparatus and the combination weighing apparatus of FIG. 1.
FIG. 5 is a plan view for explaining interference between a guide member and an article.

### Description of Embodiments

An embodiment of the present invention will be described below in detail with reference to the attached drawings. Note that, in the description of the drawings, like or equivalent elements are denoted by the same reference signs and redundant descriptions thereof will be omitted.

### Overall Configuration of Combination Weighing Apparatus

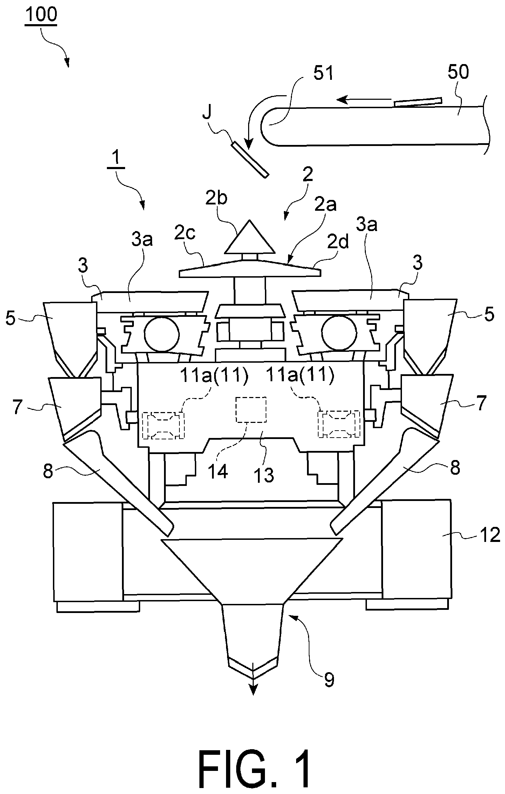

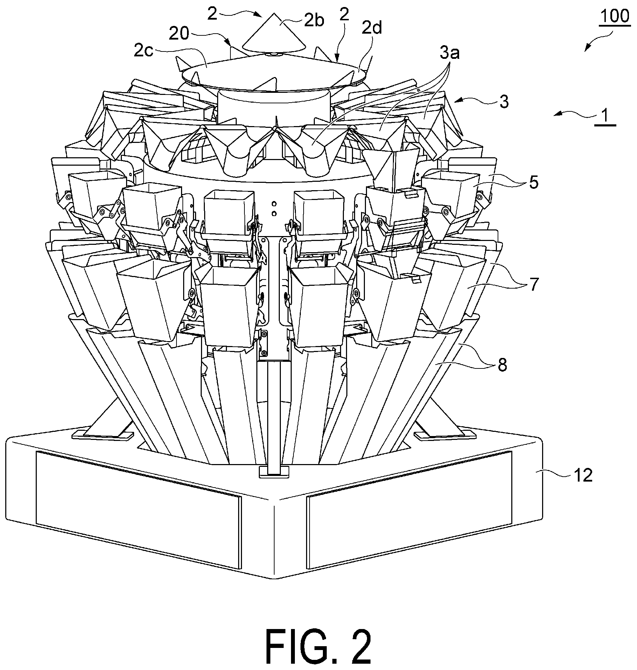

As illustrated in FIGS. 1 and 2, a combination weighing apparatus 100 includes a distributing and feeding apparatus 1 disposed at an upper stage, a plurality of pool hoppers (hoppers) 5, a plurality of weighing hoppers (hoppers) 7, an individual chute 8, a weighing unit 11, and a control unit 14 disposed at a lower stage. The combination weighing apparatus 100 weighs an article J fed by a transport feeder 50 provided upstream of a distribution unit 2 so as to obtain a target weighing value. The article J is, for example, a food product such as a long jerky having adhesiveness.

The distributing and feeding apparatus 1 includes the distribution unit 2 and a plurality of transport feeders 3.

The distribution unit 2 is disposed below a downstream end 51 of the transport feeder 50. The distribution unit 2 circumferentially distributes the article J fed from above. The distribution unit 2 includes a distribution table 2a having an obtuse apex angle and a conical portion 2b coaxially provided above a center of the distribution table 2a and having an acute apex angle. A diameter of the distribution table 2a is larger than a diameter of the conical portion 2b. The distribution table 2a and the conical portion 2b are formed of, for example, a stainless steel material. Front surfaces of the distribution table 2a and the conical portion 2b may be embossed.

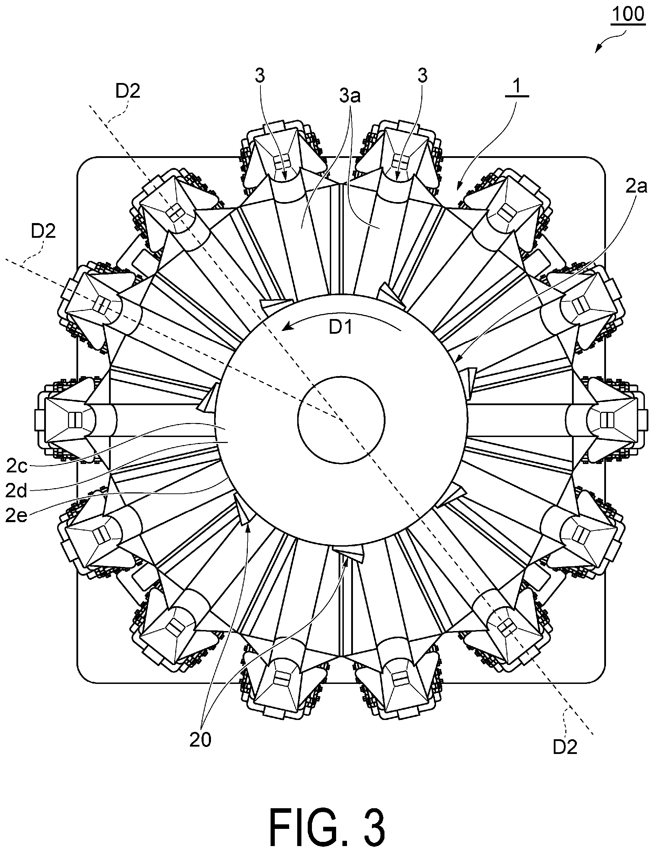

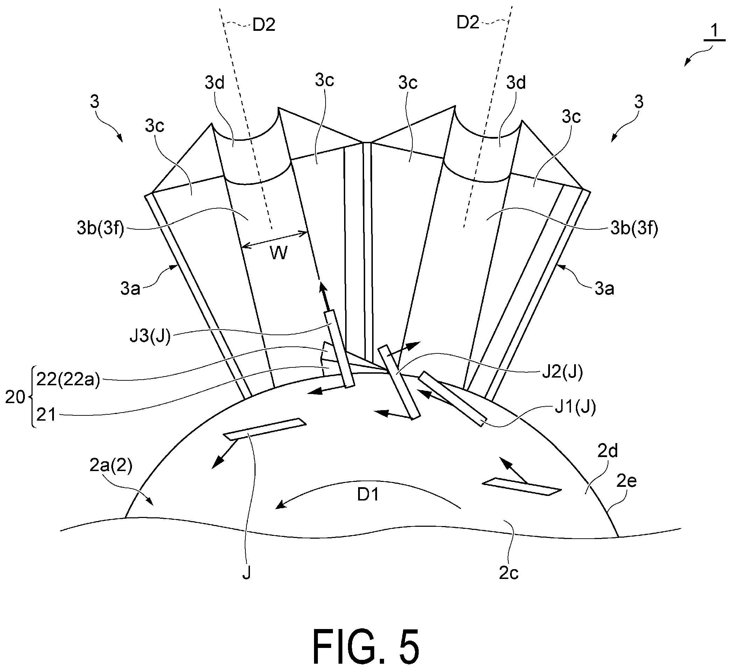

The article J transported from an outside by the transport feeder 50 and discharged from the downstream end 51 is dropped onto an upper portion of the conical portion 2b, and is distributed on the distribution table 2a. The distribution table 2a is vibrated by a drive unit provided below the distribution table 2a, and, in a state in which the distribution table 2a itself does not rotate in a circumferential direction D1 (see FIG. 3), moves the article J on an upper surface 2c of the distribution table 2a in the circumferential direction D1. The article J on the upper surface 2c is distributed while moving around a vertical axis (for example, counterclockwise when viewed from above), and sent to the surrounding transport feeder 3. Therefore, the distribution table 2a circumferentially distributes the long article J fed from above, and transports the article J in the circumferential direction D1 so that a longitudinal direction of the article J is along the circumferential direction D1 at an outer peripheral portion 2d of the distribution table 2a (see FIG. 5).

As illustrated in FIGS. 1 to 3, the plurality of transport feeders 3 are arrayed radially around the distribution table 2a. Each transport feeder 3 includes a trough 3a and a drive unit provided below the trough 3a. The trough 3a extends outward along a radial direction D2 (see FIG. 3) with a lower side of the outer peripheral portion 2d of the upper surface 2c of the distribution table 2a as a base end. The article J discharged from the outer peripheral portion 2d of the upper surface 2c of the distribution table 2a drops onto the trough 3a. Each transport feeder 3 transports the article J on the trough 3a toward a tip end portion of the trough 3a by vibrating the trough 3a by the drive unit.

In the example of FIGS. 2 and 3, 14 troughs 3a are arrayed radially around the distribution unit 2. The number and arrangement of troughs 3a are not limited thereto. The number and arrangement of the troughs 3a may be changed as appropriate according to, for example, the number and arrangement of pool hoppers 5 described below.

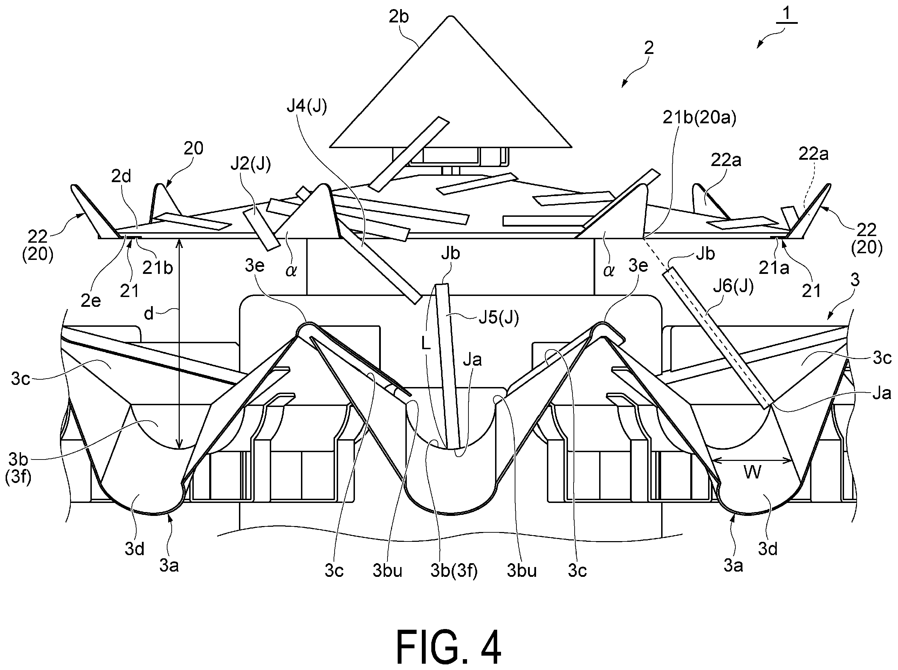

The plurality of transport feeders 3 transport the articles J in the radial direction D2 while aligning the articles J received from the distribution table 2a so as to face the radial direction D2. To be specific, as illustrated in FIG. 4, the trough 3a of the transport feeder 3 includes a bottom surface 3b, a pair of widened side surfaces 3c, and a discharge portion 3d.

The bottom surface 3b extends along the radial direction D2 at a center portion in a width direction of one trough 3a. The bottom surface 3b extends linearly along the radial direction D2 to the discharge portion 3d, and is provided so as to become lower as a distance to the discharge portion 3d is decreased or provided substantially horizontal. The discharge portion 3d is a portion that is continuous from the bottom surface 3b at an end portion downstream of the trough 3a.

The bottom surface 3b and the discharge portion 3d have a U-shaped cross-section that is convex downward when viewed in the radial direction D2. With such a shape of the bottom surface 3b and the discharge portion 3d, the article J in a state of being entirely dropped onto the bottom surface 3b or the discharge portion 3d is guided so as to slide and drop onto a lowest portion of the bottom surface 3b or the discharge portion 3d, and thus is directed along an extending direction of the bottom surface 3b and the discharge portion 3d, and is brought into a state where the longitudinal direction is along the radial direction D2.

The pair of widened side surfaces 3c extend so as to widen upward from each of a pair of upper end portions 3bu of the bottom surface 3b when viewed in the radial direction D2. The pair of widened side surfaces 3c extend upward so as to be separated from each other, and form a part of a V-shaped cross-section when viewed in the radial direction D2. Each widened side surface 3c widens as the discharge portion 3d is approached in plan view. An upper end portion of each widened side surface 3c faces an upper end portion of the widened side surface 3c of the adjacent trough 3a.

In one trough 3a, at an upper end portion of the widened side surface 3c on one side, a cover portion 3e covering a gap of a portion facing an upper end portion of the widened side surface 3c of the adjacent trough 3a is formed. The cover portion 3e has a U-shaped cross-section that is convex upward when viewed in the radial direction D2. Such a shape of each widened side surface 3c, and the cover portion 3e ensure that the article J discharged from the outer peripheral portion 2d of the distribution table 2a drops onto the trough 3a.

When viewed in the radial direction D2, a width dimension W of the pair of upper end portions 3bu of the bottom surface 3b, which is orthogonal to the radial direction D2, is shorter than a length L in the longitudinal direction of the article J. For example, the article J that dropped onto the trough 3a in a posture where the longitudinal direction thereof intersects the radial direction D2 is prevented from being brought into a state of spanning inside the bottom surface 3b in that posture. When the article J drops onto the trough 3a in the posture where the longitudinal direction thereof intersects the radial direction D2, at least one of both ends of the article J is brought into a state of being positioned on the widened side surface 3c.

In this way, the article J that dropped onto the trough 3a drops onto the bottom surface 3b in a state where the longitudinal direction of the entire article J is along the radial direction D2 from the beginning, or drops such that one or both end portions of the article J are positioned on the widened side surface 3c. When one or both the end portions of the article J are positioned on the widened side surface 3c, the article J is guided so as to slide and drop onto the bottom surface 3b, and therefore, it is more certain that the longitudinal direction of the article J will be brought to a state of being along the radial direction D2.

The plurality of pool hoppers 5 are disposed so as to surround a center line (not illustrated) of the combination weighing apparatus 100, which is parallel to a vertical direction, for example. The pool hopper 5 is disposed below the discharge portion 3d of a tip end of the trough 3a of each transport feeder 3. The pool hopper 5 closes a gate provided at a lower portion thereof to temporarily store the article J discharged from each transport feeder 3. Further, each pool hopper 5 opens the gate to discharge the temporarily stored article J downward.

The plurality of weighing hoppers 7 are disposed so as to surround the above center line. The weighing hopper 7 is disposed below each pool hopper 5 and receives the article J discharged from the pool hopper 5. Each weighing hopper 7 closes a gate provided at a lower portion thereof to temporarily store the article J discharged from the corresponding pool hopper 5. Further, each weighing hopper 7 opens the gate to discharge the temporarily stored article J downward.

The individual chute 8 collects the article J discharged from each weighing hopper 7 into a discharge portion 9. The discharge portion 9 is a portion that discharges the article J weighed by the combination weighing apparatus 100 to the outside, and is positioned on the above center line below the combination weighing apparatus 100. The individual chute 8 receives the article J discharged from each weighing hopper 7 and slides the article J toward the discharge portion 9.

The weighing unit 11 is disposed in a case 13 supported by a frame 12. The weighing unit 11 includes a plurality of load cells 11a. Each load cell 11a supports the corresponding weighing hopper 7. When the article J is temporarily stored in each weighing hopper 7, the weighing unit 11 obtains a weighing value corresponding to a mass by weighing the article J.

In this way, the plurality of weighing hoppers 7 indirectly receive the articles J transported by the transport feeders 3 of the distributing and feeding apparatus 1 via the plurality of pool hoppers 5. The weighing unit 11 weighs the article J stored in each of the plurality of weighing hoppers 7.

The control unit 14 is disposed in the case 13. The control unit 14 includes a central processing unit (CPU), a read only memory (ROM), a random access memory (RAM), and the like. The control unit 14 controls the operation of each unit of the combination weighing apparatus 100, such as the transport operation of the distribution table 2a and the transport feeder 3, the open/close operation of the gate of each pool hopper 5, and the open/close operation of the gate of each weighing hopper 7.

The control unit 14 performs combination weighing based on a weighing value of the article J, and discharges the combined article J from the weighing hopper 7. The control unit 14 stores the weighing value weighed by the weighing unit 11 in association with the weighing hopper 7 storing the article J corresponding to the weighing value. The control unit 14 selects, from a plurality of the weighing values weighed by the weighing units 11 and associated with each of the weighing hoppers 7, a combination of the weighing values so that a total value matches a target weighing value. The control unit 14 causes the weighing hoppers 7 corresponding to the combination to discharge the articles J.

Note that the distribution unit 2, the plurality of transport feeders 3, the plurality of pool hoppers 5, and the plurality of weighing hoppers 7 are directly or indirectly supported by the case 13. The individual chute 8 and the discharge portion 9 are directly or indirectly supported by the frame 12.

### Detailed Configuration of Distributing and Feeding Apparatus

When the long article J is fed from above to the distribution table 2a having the above-described configuration, the longitudinal direction of the article J on the distribution table 2a is brought into a state of being along the circumferential direction D1 of the distribution table 2a, and the article J may continue to be transported in the circumferential direction D1. Therefore, a plurality of guide members 20 are provided around the outer peripheral portion 2d of the distribution table 2a.

The guide member 20 is a member for promoting the discharge of the article J transported on the distribution table 2a to the transport feeder 3. The guide member 20 is indirectly supported by the case 13, for example, around the outer peripheral portion 2d of the distribution table 2a, and is fixed so as not to move together with the article J transported on the distribution table 2a.

As an example of the plurality of guide members 20, seven guide members 20 are provided for the 14 troughs 3a, as illustrated in FIG. 3. One guide member 20 is disposed for every two troughs 3a, and the guide members 20 are disposed at equal intervals. That is, the plurality of guide members 20 are disposed around the outer peripheral portion 2d of the distribution table 2a such that an interval between the adjacent guide members 20 is longer than the length L in the longitudinal direction of the article J.

The guide member 20 is provided so as to interfere with the article J transported at the outer peripheral portion 2d of the distribution table 2a so that the longitudinal direction of the article J is directed from the circumferential direction D1 to the radial direction D2. For example, as illustrated in FIGS. 4 and 5, the guide member 20 includes, for example, an extending portion 21 and an upright portion 22.

The extending portion 21 is a portion extending from below the outer peripheral portion 2d of the distribution table 2a along the radial direction D2. The extending portion 21 is, for example, a flat plate-shaped portion extending horizontally along the radial direction D2. An extending length in the radial direction D2 of the extending portion 21 is not particularly limited, but can be determined in consideration of, for example, a degree of protrusion of the article J from an end portion 2e of the distribution table 2a in a situation where the discharge of the article J is jammed at the outer peripheral portion 2d of the distribution table 2a.

The upright portion 22 is a portion that is bent and extends upward at a tip end 21a of the extending portion 21. The upright portion 22 is, for example, a flat plate-shaped portion extending upward from the tip end 21a. The upright portion 22 may be formed integrally with the extending portion 21 by bending a flat plate-shaped member so as to be valley-folded at the tip end 21a.

The tip end 21a is a fold line that extends so as to be inclined in a direction orthogonal to the radial direction D2. The tip end 21a is inclined in the direction orthogonal to the radial direction D2 such that an upstream side in a transport direction of the article J on the distribution table 2a is closer to the end portion 2e of the distribution table 2a than a downstream side in the transport direction. Therefore, since the tip end 21a is inclined in the direction orthogonal to the radial direction D2 in this manner, a normal direction of the flat plate-shaped portion of the upright portion 22 is also inclined in the direction orthogonal to the radial direction D2. That is, the upright portion 22 includes a guide surface 22a that is not orthogonal to the radial direction D2. The guide surface 22a is an upper surface portion of the flat plate-shape of the upright portion 22.

The guide surface 22a has, for example, a triangular shape. The guide surface 22a has a triangular shape in which an angle of a corner α positioned upstream in the transport direction among three corners is the smallest. This makes it easier for the article J that protrudes from the end portion 2e of the distribution table 2a to run onto the upright portion 22.

An angle formed by the guide surface 22a and an upper surface of the extending portion 21 is, for example, an obtuse angle. The guide surface 22a is more likely to push up the article J protruding from the end portion 2e of the distribution table 2a and running onto the upright portion 22, as compared with a case where the angle formed by the guide surface 22a and the upper surface of the extending portion 21 is equal to or larger than a right angle.

Such interference between the guide member 20 and the article J will be described with reference to FIGS. 4 and 5. As illustrated in FIG. 4, the article J is pushed by the article J further fed from above or approaches the end portion 2e due to a downward gradient of the distribution table 2a, and thus is distributed to the outer peripheral portion 2d. However, a plurality of the articles J are transported with the longitudinal direction thereof facing the circumferential direction D1 at the outer peripheral portion 2d, the discharge of the articles J to the transport feeders 3 does not proceed, and the articles J are jammed in some cases.

FIG. 5 illustrates a state in which a plurality of the articles J are transported in the circumferential direction D1 at the outer peripheral portion 2d on the distribution table 2a. The articles J in FIG. 5 are positioned near the end portion 2e among the articles J transported at the outer peripheral portion 2d. As illustrated in FIG. 5, the article J transported at the outer peripheral portion 2d is transported with the longitudinal direction thereof facing the circumferential direction D1, and a part of the article J eventually protrudes from the end portion 2e (an article J1).

When the article J is transported in a state of partially protruding from the end portion 2e, the article J protruding from the end portion 2e hits (interferes with) an end portion upstream of the upright portion 22 and runs onto the upright portion 22 (an article J2). At this time, since the guide member 20 is fixed with respect to the article J transported on the distribution table 2a, force for moving in the transport direction acts on the article J on the distribution table 2a, while force for preventing the movement of the article J acts from the upright portion 22. Thus, the article J is rotated on the distribution table 2a in plan view such that the longitudinal direction of the article J is directed from the circumferential direction D1 to the radial direction D2.

The article J having the longitudinal direction being along the radial direction D2 is pushed outward in the radial direction D2 and runs onto the upright portion 22 by the force for moving in the transport direction on the distribution table 2a and the downward gradient of the distribution table 2a, and the article J drops from the end portion 2e while being pushed upward by the guide surface 22a (an article J3).

Incidentally, another article J present around the article J is caught on the article J by the rotation of the article J and the upward pushing of the article J. When hit by the article J, a direction of the other article J is also directed from the circumferential direction D1 to the radial direction D2, and is likely to drop from the end portion 2e (an article J4 in FIG. 4).

By the way, as illustrated in FIG. 4, each transport feeder 3 is provided at a position lower than the outer peripheral portion 2d of the distribution table 2a. A step d between the end portion 2e of the outer peripheral portion 2d of the distribution table 2a and a transport surface 3f of the transport feeder 3 is larger than the length L in the longitudinal direction of the article J. The transport surface 3f here means a front surface of the bottom surface 3b having a U-shaped cross-section, and corresponds to a range from one upper end portion 3bu to another upper end portion 3bu via a lowest portion of the bottom surface 3b when viewed in the radial direction D2.

Since the step d is larger than the length L in the longitudinal direction of the article J, for example, even when the article J (an article J5 in FIG. 4) abuts against the lowest portion of the bottom surface 3b and is in a posture of standing in the vertical direction, the article J is prevented from spanning between the end portion 2e of the outer peripheral portion 2d of the distribution table 2a and a lowest portion of the transport surface 3f of the transport feeder 3.

Further, the guide member 20 may be disposed so that an upper end Jb of the article J does not continue to ride on the end portion 2e of the outer peripheral portion 2d of the distribution table 2a, even when the article J is in a posture inclined from the vertical direction. For example, when the article J (an article J6 in FIG. 4) is in a posture extending in a direction in which a downstream end 20a of the guide member 20 and the upper end portion 3bu of the bottom surface 3b are connected, a distance between the downstream end 20a of the guide member 20 and the transport surface 3f of the transport feeder 3 may be set such that the article J does not span between the downstream end 20a and the upper end portion 3bu. The downstream end 20a of the guide member 20 here is, for example, a downstream end 21b of the extending portion 21.

If the article J spans between the downstream end 20a and the upper end portion 3bu in such posture, the upper end Jb side of the article J may be brought into a state of leaning against a corner portion where the end portion 2e of the outer peripheral portion 2d of the distribution table 2a and the downstream end 20a of the guide member 20 intersect each other while a lower end Ja of the article J abuts against the transport surface 3f of the transport feeder 3. With the upper end Jb of the article J leaning against the corner portion where the end portion 2e and the downstream end 20a intersect each other as a starting point, transport of another article J on the distribution table 2a may be hindered, and the article J may be jammed on the distribution table 2a. When the articles J jammed in this manner clump and drop onto the trough 3a, there is a risk that clogging of the articles J occurs in the pool hopper 5 or the weighing hopper 7, or that over-scaled weighing value in the weighing hopper 7 occurs.

Therefore, the end portion 2e of the outer peripheral portion 2d of the distribution table 2a is configured not to come into contact with the upper end Jb of the article J when the lower end Ja of the article J abuts against the transport surface 3f of the transport feeder 3. This prevents the upper end Jb side of the article J from being brought into a state of being leaned against the corner portion where the end portion 2e and the downstream end 20a intersect each other. As a result, the jammed articles J are prevented from clumping and dropping onto the trough 3a, and it is possible to prevent occurrence of clogging of the articles J in the pool hopper 5 or the weighing hopper 7 or prevent occurrence of over-scaled weighing value in the weighing hopper 7.

As described above, in the distributing and feeding apparatus 1, the guide member 20 interferes with the article J transported at the outer peripheral portion 2d of the distribution table 2a, so that the longitudinal direction of the article J is directed from the circumferential direction D1 to the radial direction D2. Since the longitudinal direction of the article J is directed from the circumferential direction D1 to the radial direction D2, not only the direction of the article J but also a direction of another article J present around the article J is changed from the circumferential direction D1 by being hit by the article J. In this way, the article J is prevented from being continuously transported on the distribution table 2a in the circumferential direction D1 in a state where the longitudinal direction of the article J is along the circumferential direction D1 of the distribution table 2a, and the discharge of the article J to the transport feeder 3 is promoted. Therefore, according to the distributing and feeding apparatus 1, it is possible to reduce jamming of the distribution and the feeding of the long article J from the distribution table 2a to the transport feeder 3.

The guide member 20 includes the extending portion 21 extending along the radial direction D2 from below the outer peripheral portion 2d of the distribution table 2a, and the upright portion 22 bent and extending upward at the tip end 21a of the extending portion 21. The upright portion 22 includes the guide surface 22a that is not orthogonal to the radial direction D2. Accordingly, the guide surface 22a that is not orthogonal to the radial direction D2 can guide the article J so as to be distributed to the transport feeder 3 without stopping the movement of the article J in the radial direction D2, the article J having the longitudinal direction directed from the circumferential direction D1 to the radial direction D2.

The transport feeder 3 is provided at the position lower than the outer peripheral portion 2d of the distribution table 2a. The step d between the end portion 2e of the outer peripheral portion 2d of the distribution table 2a and the bottom surface 3b of the transport surface 3f of the transport feeder 3 is larger than the length L in the longitudinal direction of the article J. Accordingly, it is possible to reduce jamming whereby the article J spans between the end portion 2e of the outer peripheral portion 2d of the distribution table 2a and the bottom surface 3b of the transport surface 3f of the transport feeder 3.

The end portion 2e of the outer peripheral portion 2d of the distribution table 2a does not come into contact with the upper end Jb of the article J when the lower end Ja of the article J abuts against the transport surface 3f of the transport feeder 3. Accordingly, it is possible to reduce jamming whereby the article J spans between the end portion 2e of the outer peripheral portion 2d of the distribution table 2a and the transport surface 3f of the transport feeder 3.

The transport feeder 3 includes the bottom surface 3b having a U-shaped cross-section when viewed in the radial direction D2, and the widened side surface 3c extending so as to widen upward from each of the pair of upper end portions 3bu of the bottom surface 3b when viewed in the radial direction D2. Accordingly, even when the article J distributed to the transport feeder 3 is guided to the widened side surface 3c, the article J can be slid and dropped onto the bottom surface 3b having a U-shaped cross-section to be aligned so as to face the radial direction D2 on the bottom surface 3b.

When viewed in the radial direction D2, the width dimension W of the pair of upper end portions 3bu of the bottom surface 3b is shorter than the length L in the longitudinal direction of the article J. Thus, even when the article J distributed to the transport feeder 3 is directed to intersect the radial direction D2, at least one of both the ends of the article J is guided to the widened side surface 3c. Therefore, the article J can be more reliably slid and dropped to the bottom surface 3b having a U-shaped cross-section and aligned so as to face the radial direction D2 on the bottom surface 3b.

The combination weighing apparatus 100 is the combination weighing apparatus 100 including the above distributing and feeding apparatus 1 at the upper stage, and includes the plurality of weighing hoppers 7 configured to receive the article J transported by the transport feeder 3 of the distributing and feeding apparatus 1, the weighing unit 11 configured to weigh the article J stored in each of the plurality of weighing hoppers 7, and the control unit 14 configured to perform combination weighing based on a weighing value of the article J and discharges the combined article J from the hopper. Even in this case, the guide member 20 interferes with the article J transported at the outer peripheral portion 2d of the distribution table 2a, so that the longitudinal direction of the article J is directed from the circumferential direction D1 to the radial direction D2. Since the longitudinal direction of the article J is directed from the circumferential direction D1 to the radial direction D2, not only the direction of the article J but also a direction of another article J present around the article J is changed from the circumferential direction D1 by being hit by the article J. In this way, the article J is prevented from being continuously transported on the distribution table 2a in the circumferential direction D1 in the state where the longitudinal direction of the article J is along the circumferential direction D1 of the distribution table 2a, and the distribution of the article J to the transport feeder 3 is promoted. Therefore, according to the combination weighing apparatus 100, it is possible to reduce jamming of the distribution and the feeding of the long article J from the distribution table 2a to the transport feeder 3.

An embodiment of the weighing apparatus according to the present invention and variations thereof have been described above. However, the present invention is not limited to the above embodiment and the variations.

For example, in the above embodiment, the guide member 20 includes the extending portion 21 and the upright portion 22 formed of a plate-like member, but the present invention is not limited to this example. For example, the extending portion and the upright portion may be formed of a rod-shaped member. Further, the extending portion 21 may extend so as to be inclined with respect to a horizontal plane, and the upright portion 22 may be orthogonal to the radial direction D2. Further, the guide member 20 need not include the extending portion 21 or the upright portion 22.

In the above embodiment, the step d between the end portion 2e of the outer peripheral portion 2d of the distribution table 2a and the bottom surface 3b of the transport surface 3f of the transport feeder 3 is larger than the length L in the longitudinal direction of the article J, but the present invention is not limited to this example. The end portion 2e of the outer peripheral portion 2d of the distribution table 2a does not come into contact with the upper end Jb of the article J when the lower end Ja of the article J abuts against the transport surface 3f of the transport feeder 3, but the present invention is not limited to this example. For example, in the above embodiment, the outer peripheral portion 2d of the distribution table 2a has a uniform inclination and a height position of the end portion 2e is also uniform, but the height position of the end portion 2e may be partially lowered, and in this case, the step d may be partially smaller than the length L in the longitudinal direction of the article J, or there may be a partial place where the upper end Jb of the article J and the end portion 2e of the outer peripheral portion 2d come into contact with each other when the lower end Ja of the article J abuts against the transport surface 3f of the transport feeder 3.

In the above embodiment, the transport feeder 3 includes the bottom surface 3b having a U-shaped cross-section when viewed in the radial direction D2 and the pair of widened side surfaces 3c, but the present invention is not limited to this configuration. For example, the bottom surface 3b may have a V-shaped cross-section when viewed in the radial direction D2. Provided that the cross-sectional shape of the bottom surface 3b that is convex downward when viewed in the radial direction D2 is a shape that extends along the radial direction D2, the article J can be aligned such that the longitudinal direction thereof faces the radial direction D2 on the bottom surface 3b. Further, for example, the pair of widened side surfaces 3c may be omitted, and the entire configuration may be formed only by the bottom surface having a U-shaped cross-section when viewed in the radial direction D2. In this case, the width dimension of the pair of upper end portions of the bottom surface when viewed in the radial direction D2 may be larger than the length in the longitudinal direction of the article J.

In the above embodiment, the distribution table 2a is vibrated by the drive unit provided below the distribution table 2a, and, in the state in which the distribution table 2a itself does not rotate in the circumferential direction D1, moves the article J on the upper surface 2c of the distribution table 2a in the circumferential direction D1, but the present invention is not limited to this example. For example, the distribution table 2a may be configured such that the distribution table 2a itself is rotated in the circumferential direction D1 by a rotation drive unit provided below the distribution table 2a, and the article J on the upper surface 2c of the distribution table 2a may be moved in the circumferential direction D1 along with the rotation of the distribution table 2a.

In the combination weighing apparatus of the above embodiment and the variations, the pool hopper 5 is provided at the preceding stage of the weighing hopper 7, but the pool hopper 5 may be omitted. Further, although a booster hopper is not provided below the weighing hopper 7, the booster hopper may be provided.

### Reference Signs List

1 Distributing and feeding apparatus, 2a Distribution table, 2d Outer peripheral portion, 2e End portion, 3 Transport feeder, 3b Bottom surface, 3bu Upper end portion, 3c Widened side surface, 3f Transport surface, 7 Weighing hopper (hopper), 11 Weighing unit, 14 Control unit, 20 Guide member, 21 Extending portion, 21a Tip end, 22 Upright portion, 22a Guide surface, d Step, J Article, Ja Lower end, Jb Upper end, W Width dimension

## Claims

1. A distributing and feeding apparatus (1), comprising:
a distribution table (2a) configured to circumferentially distribute an article (J) having extended length and being fed from above, and transport the article (J) in a circumferential direction (D1) such that a longitudinal direction of the article (J) is along the circumferential direction (D1) at an outer peripheral portion (2d) of the distribution table (2a);
a plurality of guide members (20) provided around the outer peripheral portion (2d) of the distribution table (2a); and
a plurality of transport feeders (3) arrayed radially around the distribution table (2a), and configured to transport the article (J) in a radial direction (D2) while aligning the article (J) received from the distribution table (2a) so as to face the radial direction (D2), wherein
the plurality of guide members (20) are provided so as to interfere with the article (J) transported at the outer peripheral portion (2d) of the distribution table (2a) such that the longitudinal direction of the article (J) is directed from the circumferential direction (D1) to the radial direction (D2).

2. The distributing and feeding apparatus (1) according to claim 1, wherein
each of the plurality of guide members (20) includes an extending portion (21) extending from below the outer peripheral portion (2d) of the distribution table (2a) along the radial direction (D2), and an upright portion (22) bent and extending upward at a tip end (21a) of the extending portion (21), and
the upright portion (22) includes a guide surface (22a) being non-orthogonal to the radial direction (D2).

3. The distributing and feeding apparatus (1) according to claim 1 or 2, wherein
each of the plurality of transport feeders (3) is provided at a position lower than the outer peripheral portion (2d) of the distribution table (2a), and
a step (d) between an end portion (2e) of the outer peripheral portion (2d) of the distribution table (2a) and a bottom surface (3b) of a transport surface (3f) of each of the plurality of transport feeders (3) is larger than a length (L) in the longitudinal direction of the article (J).

4. The distributing and feeding apparatus (1) according to any one of claims 1 to 3, wherein
each of the plurality of transport feeders (3) is provided at a position lower than the outer peripheral portion (2d) of the distribution table (2a), and
an end portion (2e) of the outer peripheral portion (2d) of the distribution table (2a) does not come into contact with an upper end (Jb) of the article (J) when a lower end (Ja) of the article (J) abuts against a transport surface (3f) of each of the plurality of transport feeders (3).

5. The distributing and feeding apparatus (1) according to any one of claims 1 to 4, wherein
each of the plurality of transport feeders (3) has a bottom surface (3b) having a U-shaped cross-section when viewed along the radial direction (D2), and widened side surfaces (3c) extending so as to widen upward from each of a pair of upper end portions (3bu) of the bottom surface (3b) when viewed along the radial direction (D2).

6. The distributing and feeding apparatus (1) according to claim 5, wherein
a width dimension (W) of the pair of upper end portions (3bu) of the bottom surface (3b) when viewed along the radial direction (D2) is shorter than a length (L) in the longitudinal direction of the article (J).

7. A combination weighing apparatus (100) including the distributing and feeding apparatus (1) according to any one of claims 1 to 6 at an upper stage, the combination weighing apparatus (100) comprising:
a plurality of hoppers (7) each configured to receive the article (J) transported by a corresponding one of the plurality of transport feeders (3) of the distributing and feeding apparatus (1);
a weighing unit (11) configured to weigh the article (J) stored in each of the plurality of hoppers (7); and
a control unit (14) configured to perform combination weighing, based on a weighing value of the article (J) and discharge the article (J) that has been combined from the hopper (7).
